# EUROPEAN PATENT APPLICATION

(11) **EP 2 506 621 A1**
(43) Date of publication of application: **03.10.2012**
(21) Application number: 10833338.6
(22) Date of filing: 26.11.2010
(51) Int. Cl.: H04W 16/10, H04W 16/32, H04W 84/10

(54) **WIRELESS COMMUNICATION SYSTEM, HIGH POWER BASE STATION, LOW POWER BASE STATION AND COMMUNICATION CONTROL METHOD**

(30) Priority: 27.11.2009 JP 2009270828
(71) Applicant: Kyocera Corporation, Kyoto-shi Kyoto 612-8501 (JP)
(72) Inventor: OKINO, Kenta, Yokohama-shi Kanagawa 224-8502 (JP)
(74) Representative: Schwabe - Sandmair - Marx
(86) International application number: PCT/JP2010/071148
(87) International publication number: WO 2011/065493

(57) **Abstract**

A high power base station (100), when having detected a small cell (PC1) that is formed by a low power base station (200) and that is a source of interference, decides both a cell-edge band, which is used in a cell-edge area (MC1OUT and a cell-center band, which is used in a cell-center area (MC1IN), in such a manner that the cell-edge and cell-center bands are different from each other. Further, the high power base station (100) transmits the decided cell-center band to the low power base station (200). The low power base station (200) then decides, as the small-cell band, the cell-center band received from the high power base station (100).

## Description

### TECHNICAL FIELD

The present invention relates to a radio communication system which includes a high-power base station forming a large cell and a low-power base station having a transmission power lower than the high-power base station and forming a small cell smaller than the large cell, the low-power base station being installed within the large cell, and relates to a high-power base station and a low-power base station within the radio communication system, and a communication control method in the radio communication system.

### BACKGROUND ART

One of next generation radio communication systems to achieve communications with higher speed and larger capacity than the currently-operated 3rd and 3.5th generation radio communication systems is LTE under standardization by the 3GPP that is a standardization organization of radio communication systems.

In the LTE, for a radio communication system including only high-power base stations (Macro eNodeB) each forming a large cell (for example, a macrocell) which is a communication area with a radius on the order of several hundredmeters, proposed is the following interference avoiding method for an uplink in a radio terminal located in an outer-side area (cell edge) in a large cell. Specifically, in this method, the large cells use a common frequency band in their inner-side areas while using different frequency bands (cell edge bands) in their outer-side areas (see, for example, non-patent literature 1). This prevents radio terminals (cell edge terminals) in the cell edges of different large cells from using the same frequency band, and thereby avoids the deterioration of a communication quality due to a signal collision. This interference avoiding method is referred to as ICIC (Inter-Cell Interference Coordination).

In the LTE Release 9, standardization of detail functions and requirements of a small cell base station (Home eNodeB) are under development. The small cell base station is a small base station installable indoors and is configured to form a cell (referred to as small cell) which is a communication area having a radius of several to several tens of meters. The low-power base station is installed with a view to distributing traffic of the high-power base station and covering a dead zone within the large cell. Such configuration of a radio communication system is referred to as a heterogeneous deployment. As an uplink ICIC under the heterogeneous deployment, it is proposed is to completely divide all frequency bands usable in the radio communication system into frequency bands for use by large cells and frequency bands for use by small cells (hard frequency reuse) (see, for example, non-patent literature 2).

### CITATION LIST

### NON-PATENT LITERATURE

Non-patent literature 1: 3GPP, R1-074851, Ericsson, "Uplink inter-cell interference coordination"
Non-patent literature 2: 3GPP, R1-093146, "UL Carrier Aggregation Performance in Heterogeneous Networks"

### SUMMARY OF THE INVENTION

However, when a low-power base station is added to the radio communication system including only the high-power base stations after the ICIC, and if the small cell is allowed to use all the frequency bands usable in the radio communication system, i.e., if any of all the frequency bands is allowed to be assigned to a radio terminal (a small cell terminal) connected to the low-power base station, the communication quality of a radio terminal (a large cell terminal) connected to a high-power base station is deteriorated by the interference from the small cell terminal.

In general, among all throughputs by large cell terminals, a throughput by a radio terminal (large cell edge terminal) in an outer-side area within the large cell is deteriorated due to a large distance from the high-power base station. When a low-power base station is added under a situation where a large cell terminal has a deteriorated throughput even in normal time as described above, the large cell terminal receives further increased interference. Thus, the throughput in the large cell edge terminal may be further deteriorated.

Also, the radio communication system including only the high-power base stations does not necessarily require the ICIC technique when performing advanced transmission power control or scheduling of radio terminals. The reason is that the ICIC imposes limitations on the usable frequency bands and thereby decreases the effect of communication quality improvement by the scheduling in some cases. Furthermore, when addition of a low-power base station complicates the interference state in the large cell, the above-described advanced transmission power control or scheduling has difficulty obtaining the effect of communication quality improvement, and may conversely deteriorate the communication quality.

On the other hand, when different frequency bands are used by the large cell and the small cell in the radio communication system under the heterogeneous deployment, the communication quality of a large cell terminal is not deteriorated by the addition of a low-power base station. However, part of all the frequency bands usable in the radio communication system is dedicated to the small cell and the rest of the frequency bands is dedicated to the large cell. Accordingly, the frequency band usable by the large cell is so narrowed that the throughputs of the large cell terminal may be deteriorated.

Against this background, an objective of the present invention is to provide a radio communication system, a high-power base station, a low-power base station, and a communication control method which enable achievement of a high communication quality in the entire system by properly decreasing an interference of a radio terminal connected to a low-power base station with a radio terminal connected to the high-power base station without deteriorating a communication quality in the low-power base station.

The present invention has the following features to solve the problems described above. First of all, a first feature of the present invention is summarized as follows. A radio communication system (radio communication system 1) comprises: a high-power base station (high-power base station 100) forming a large cell (MC1), and a low-power base station (low-power base station 200) having a transmission power lower than a transmission power of the high-power base station, and forming a small cell (PC1) smaller than the large cell, the low-power base station installed within the large cell, wherein the high-power base station comprises: a detector (interference small cell detector 112) configured to detect the low-power base station; and a notification unit (use band determination unit 114, wired communication unit 106) configured to notify the low-power base station detected by the detector of a frequency band for use in an inner-side area or an outer-side area within the cell by the high-power base station, and a frequency band for use in the inner-side area within the large cell is different from a frequency band for use in the outer-side area within the large cell, and the low-power base station determines only the frequency band for use in the inner-side area within the large cell as a frequency band for use in the small cell based on the notification from the high-power base station.

In such a radio communication system, the frequency band for use in the inner-side area in the large cell and the frequency band for use in the outer-side area in the large cell are different from each other. Furthermore, the frequency band for use in a small cell and the frequency band for use in the outer-side area in the large cell are different fromeach other. Accordingly, the frequency band used by the radio terminal located in the outer-side area in the large cell and connected to the high-power base station is different from the frequency band used by the radio terminal connected to the low-power base station. This prevents the communication between the low-power base station and the radio terminal connected to the low-power station from interfering with the communication between the high-power base station and the radio terminal located in the outer-side area within the large cell and connected to the high-power base station. Also, unlike the conventional system, the frequency band usable by the high-power base station is not narrowed as a result of using part of all the frequency bands usable in the radio communication system as a frequency band dedicated to the small cell. Thus, the high-power base station can use all the frequency bands usable in the radio communication system, and thereby a throughput of the radio terminal connected to the high-power base station is prevented from deteriorating.

A second feature of the present invention is summarized as fallows . When the detector detects the low-power base station, the high-power base station determines different frequencybands as the frequency band for use in the inner-side area within the large cell and the frequency band for use in the outer-side area within the large cell, and when the detector does not detect the low-power base station, the high-power base station determines all frequency bands usable in the radio communication system as frequency bands for use in an entire area within the large cell.

A third feature of the present invention is summarized as follows. When a radio terminal is not connected to the low-power base station after different frequency bands are determined as the frequency band for use in the inner-side area within the large cell and the frequency band for use in the outer-side area within the large cell, the high-power base station determines all frequency bands usable in the radio communication system as frequency bands for use in an entire area within the large cell.

A fourth feature of the present invention is summarized as follows. When an amount of interference of a communication between the low-power base station and a radio terminal connected to the low-power base station with a communication between the high-power base station and a radio terminal connected to the high-power base station is equal to or smaller than a predetermined value, the low-power base station determines all frequency bands usable in the radio communication system as frequency bands usable in the radio terminal.

A fifth feature of the present invention is summarized as follows. A radio communication system comprises: a high-power base station forming a large cell; and a low-power base station having a transmission power lower than a transmission power of the high-power base station and forming a small cell smaller than the large cell, the low-power base station installed within the large cell, wherein different frequency bands are used in an inner-side area and an outer-side area within the large cell, and a frequency band for use in the small cell formed by the low-power base station is equal to a frequency band for use in the inner-side area.

A sixth feature of the present invention is summarized as follows. A high-power base station forming a large cell, comprises: a notification unit (use band determination unit 114, wired communication unit 106) configured to notify a low-power base station of a frequency band for use in an inner-side area or an outer-side area within the large cell by the high-power base station, the low-power base station installed within the large cell, having a transmission power lower than a transmission power of the high-power base station and forming a small cell smaller than the large cell, wherein the frequency band for use in the inner-side area within the large cell is different from the frequency band for use in the outer-side area within the large cell.

A seventh feature of the present invention is summarized as follows. A low-power base station forming a small cell, wherein the low-power base station is installed within a large cell of a high-power base station having a transmission power higher than a transmission power of the low-power base station and forming the large cell larger than the small cell, the low-power base station is notified, by the high-power base station, of a frequency band for use in an inner-side area or an outer-side area within the large cell by the high-power base station, and the low-power base station comprises a determination unit configured to determine only the frequency band for use in the inner-side area within the large cell by the high-power base station as a frequency band for use in the small cell based on the notification from the high-power base station, and the frequency band for use in the inner-side area within the large cell is different from the frequency band for use in the outer-side area within the large cell.

An eighth feature of the present invention is summarized as follows. A communication control method in a radio communication system which includes a high-power base station forming a large cell and a low-power base station having a transmission power lower than a transmission power of the high-power base station and forming a small cell smaller than the large cell, the low-power base station installed within the large cell, comprises the steps of: detecting the low-power base station by the high-power base station; sending the detected low-power base station a notification indicating a frequency band for use in an inner-side area or an outer-side area within the cell by the high-power base station, the frequency band for use in the inner-side area within the large cell being different from the frequency band for use in the outer-side area within the large cell; and determining, by the low-power base station, only the frequency band for use in the inner-side area within the large cell as a frequency band for use in the small cell based on the notification from the high-power base station.

The features of the present invention enable achievement of a high communication quality in an entire system by properly decreasing an interference of a radio terminal connected to a low-power base station with a radio terminal connected to a high-power base station without deteriorating a communication quality in the low-power base station.

### BRIEF DESCRIPTION OF THE DRAWING

[Fig. 1] Fig. 1 is an entire schematic configuration diagram of a radio communication system according to an embodiment of the present invention.
[Fig. 2] Fig. 2 is a block diagram illustrating configurations of a high-power base station and a low-power base station according to the embodiment of the present invention.
[Fig. 3] Fig. 3 is a drawing illustrating an example of frequency bands which are used in the high-power base station and the low-power base station according to the embodiment of the present invention.
[Fig. 4] Fig. 4 is a flowchart illustrating a first operational example of the radio communication system according to the embodiment of the present invention.
[Fig. 5] Fig. 5 is a flowchart illustrating a second operational example of the radio communication system according to the embodiment of the present invention.
[Fig. 6] Fig. 6 is a drawing illustrating a first correspondence relationship between the frequency bands which are used in the high-power base station and the low-power base station and a cell according to the embodiment of the present invention.
[Fig. 7] Fig. 7 is a drawing illustrating a second correspondence relationship between the frequency bands which are used in the high-power base station and the low-power base station and a cell according to the embodiment of the present invention.

### DESCRIPTION OF THE EMBODIMENT

Hereinafter, embodiments of the present invention are described below by referring to the drawings. Specifically, the description is given of (1) Configuration of Radio Communication System, (2) Operation of Radio Communication System, (3) Advantageous Effects, and (4) Other Embodiments. In the following description of the drawings, same or similar reference numerals are given to denote same or similar portions.

### (1) Configuration of Radio Communication System

### (1.1) Entire schematic configuration of a radio communication system

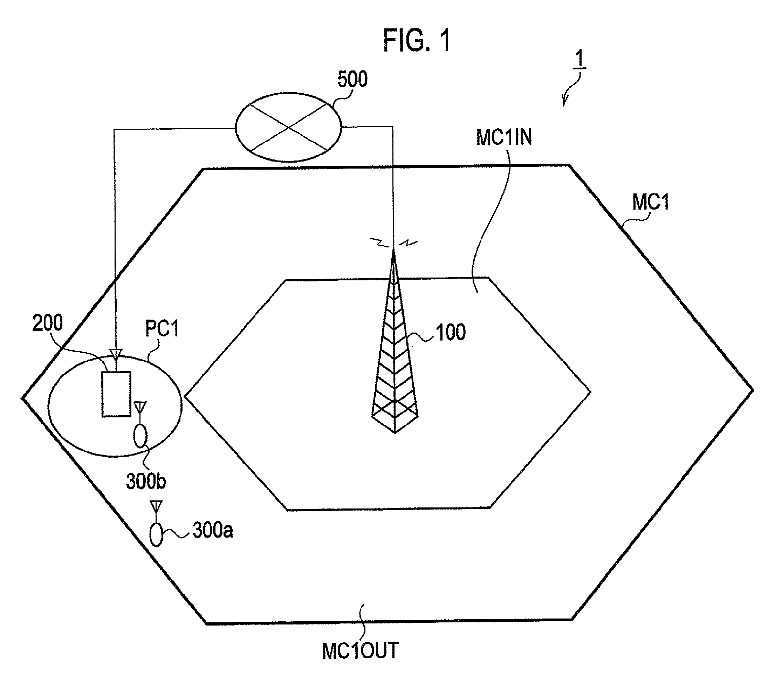

Fig. 1 is an entire schematic configuration diagram of a radio communication system 1 according to an embodiment of the present invention. The radio communication system 1 has a configuration based on LTE Release 9 which is the 3.9th generation (3. 9G) mobile communication system or LTE-Advanced which is positioned as the 4th generation (4G) mobile communication system.

As illustrated in Fig. 1, the radio communication system 1 has a high-power base station (a high-output power base station, a large-output base station) (for example, a macrocell base station) 100 forming a large cell (for example, a macrocell) MC1. A radius of the large cell MC1 is on the order of several hundreds [m], for example. The large cell MC1 can be divided into an inner-side area (cell center area) MClINandanouter-side area (cell edge area) MC10UT.

Also, the radio communication system 1 has a low-power base station (a low-output power base station, a small output base station) (for example, a picocell base station) 200 which is installed in a cell edge area MC1OUT. The low-power base station 200 has a transmission output (transmission power) smaller than that of the high-power base station 100, and forms a small cell (for example, a picocell) PC1. A radius of the small cell PC1 is on the order of several dozens [m], for example.

The high-power base station 100 is installed in a place based on a cell site design which is made by a carrier in consideration of inter-cell interference. On the other hand, the low-power base station 200 is configured to be as small as to be installed in any place. The low-power base station 200 is installed with a view to dispersing traffic of the high-power base station 100 and covering a dead zone within the large cell MC1. The high-power base station 100 and the low-power base station 200 are connected to a core network 500 via a dedicated line.

A radio terminal 300a within the large cell MC1 is connected to the high-power base station 100 and a radio terminal 300b within the small cell PC1 is connected to the low-power base station 200.

### (1.2) Configurations of the high-power base station and the low-power base station

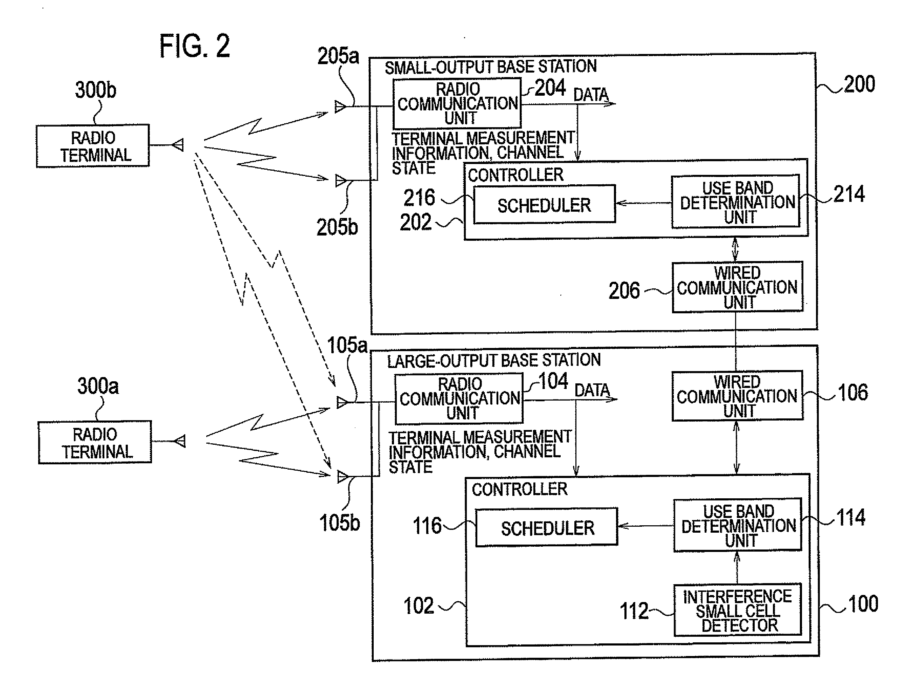

Fig. 2 is a block diagram illustrating configurations of the high-power base station 100 and the low-power base station 200 according to the embodiment of the present invention.

As illustrated in Fig. 2, the high-power base station 100 has a controller 102, a radio communication unit 104, and a wired communication unit 106. On the other hand, the low-power base station 200 has a controller 202, a radio communication unit 204, and a wired communication unit 206.

The controller 102 in the high-power base station 100 is configured using, for example, a CPU and controls various kinds of functions included in the high-power base station 100.

The radio communication unit 104 is configured using, for example, a radio frequency (RF) circuit and a base band (BB) circuit, and transmits/receives a radio signal with the radio terminal 300a via antenna units 105a and 105b. Also, the radio communication unit 104 performs encoding and modulation on a transmission signal to the radio terminal 300a and performs demodulation and decoding on a signal received from the radio terminal 300a. The radio communication unit 104 acquires data and measured information (terminal measurement information) in the radio terminal 300a by demodulating the signal received from the radio terminal 300a. The terminal measurement information includes received power (high-power received power) which is measured in the radio terminal 300a when the radio terminal 300a receives a radio signal from the high-power base station 100 and received power (low-power received power) which is measured in the radio terminal 300a when the radio terminal 300a receives a radio signal from the low-power base station 200, and identification information of the low-power base station 200.

Also, the radio communication unit 104 measures a channel state of an uplink channel (a large cell uplink channel) from the radio terminal 300a to the high-power base station 100 based on a reference signal which is a signal received from the radio terminal 300a.

The wired communication unit 106 transmits/receives various pieces of information via an X2 interface established in the core network 500 with the wired communication unit 206 in the low-power base station 200.

The controller 102 has an interference small cell detector 112, a use band determination unit 114, and a scheduler 116.

The interference small cell detector 112 inputs the terminal measurement information received by the radio communication unit 104. Furthermore, when low-power received power included in the terminal measurement information is equal to or larger than a predetermined value, the interference small cell detector 112 determines that the small cell PC1 which is formed by the low-power base station 200 specified by the identification information included in the terminal identification information is an interference source in the large cell uplink channel.

When the interference small cell detector 112 specifies the small cell PC1 being an interference source, the use band determination unit 114 determines different frequency bands as a frequency band for use in the cell edge area and a frequency band for use in the cell center area.

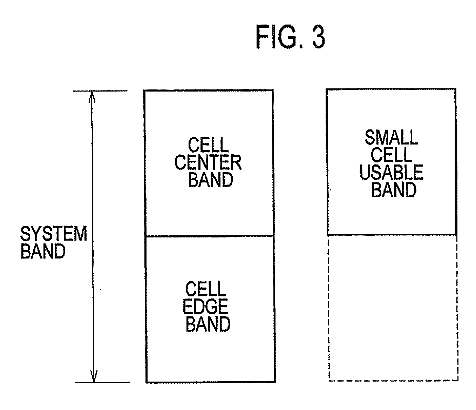

Specifically, the use band determination unit 114 divides all the frequency bands (a system band) usable in the radio communication system 1 into a first frequency band and a second frequency band. Furthermore, as illustrated in Fig. 3, the use band determination unit 114 determines the first frequency band as the frequency band for use in the cell center area MC1IN (a cell center band). Furthermore, the use band determination unit 114 determines the second frequency band as the frequency band for use in the cell edge area MC1OUT (a cell edge band). Note that, whenmultiple low-power base stations 200 are present, the use band determination unit 114 determines the first frequency band as the cell center band and determines the second frequency band as the cell edge band if at least one low-power base station is an interference source.

Furthermore, the use band determination unit 114 adds identification information of the low-power base station 200 included in the terminal measurement information to the information indicating the determined cell center band (cell center band information) and outputs the information to the wired communication unit 106.

The wired communication unit 106 transmits the cell center band information to the low-power base station 200 indicated by the identification information added to the cell center band information, via the X2 interface. It is possible in the LTE that HII (High Interference Indication) is exchanged between base stations via the X2 interface. Accordingly, the wired communication unit 106 can transmit the cell center band information with being included in the HII.

On the other hand, when the interference small cell detector 112 does not determine the low-power base station 200 being an interference source, the use band determination unit 114 determines the system band as a frequency band (a large cell band) usable in the entire area in the large cell MC1.

Also, when the connection between the low-power base station 200 and the radio terminal 300b is released after the use band determination unit 114 determines the first frequency band as a frequency band for use in the cell center area MC1IN and the second frequency band as a frequency band for use in the cell edge area MC1OUT, the wired communication unit 106 acquires information (connection release information) from the core network 500, which indicates that the connection between the low-power base station 200 and the radio terminal 300b is released. The connection release information is transmitted from the low-power base station 200 or other communication devices which are not illustrated. The connection release information includes identification information of the low-power base station 200 which releases the connection with the radio terminal 300b.

The use band determination unit 114 determines the system band as a large cell band when the connection release information is inputted. Note that, in the case where multiple low-power base stations 200 are present, the use band determination unit 114 may determine the system band as a large cell band only when the connection release information for a certain number of the low-power base stations 200 among all the low-power base stations 200 of the interference sources is inputted.

The scheduler 116 assigns a resource block as a radio resource to the radio terminal based on the terminal measurement information and the channel state from the radio communication unit 104 and the frequency band determined by the use band determination unit 114.

Specifically, when the use band determination unit 114 determines the first frequency band as a frequency band for use in the cell center area MC1IN and determines the second frequency band as a frequency band for use in the cell edge area MC1OUT, the scheduler 116 assigns a resource block of the first frequency band to the radio terminal in the cell center area MC1IN and assigns a resource block of the second frequency band to the radio terminal in the cell edge area MC1OUT.

Here, the radio communication unit 104 can measure a propagation loss of the uplink channel from the radio terminal to the high-power base station 100 by measuring the received power of a radio signal from the radio terminal. The scheduler 116 can calculate a distance from the radio terminal to the high-power base station 100 based on the propagation loss and can determines based on the distance if the radio terminal is present in the cell center area MC1IN or present in the cell edge area MC1OUT.

Also, when the system band is determined by the use band determination unit 114 as a frequency band for use in the large cell MC1, the scheduler 116 assigns a resource block of the system band to the radio terminal in the large cell MC1.

The controller 202 in the low-power base station 200 is configured using, for example, a CPU and controls various kinds of functions included in the low-power base station 200.

The radio communication unit 204 includes, for example, a radio frequency (RF) circuit and a base band (BB) circuit, and transmits/receives a radio signal with the radio terminal 300b via antenna units 205a and 205b. Also, the radio communication unit 204 performs encoding and modulation on a signal to be transmitted to the radio terminal 300b and performs demodulation and decoding on a signal received from the radio terminal 300a. The radio communication unit 204 acquires data and measured information (terminal measurement information) in the radio terminal 300b by demodulating the signal received from the radio terminal 300b.

Also, the radio communication unit 204 measures a channel state of an uplink channel (a small cell uplink channel) from the radio terminal 300b to the low-power base station 200 based on a reference signal which is a signal received from the radio terminal 300b.

The wired communication unit 206 transmits/receives various kinds of information via an X2 interface established in the core network 500 with the wired communication unit 106 in the high-power base station 100.

The controller 202 has a use band determination unit 214 and a scheduler 216.

When cell center band information from the wired communication unit 106 in the high-power base station 100 is received, the wired communication unit 206 outputs the cell center band information to the controller 202.

The use band determination unit 214 in the controller 202 acquires the cell center band information. Also, the use band determination unit 214 in the controller 202 acquires information indicating received power (low-power received power) when the radio terminal 300b which is connected to the low-power base station 200 receives a signal from the low-power base station 200 and information indicating received power (high-power received power) when the radio terminal 300b receives a signal from the high-power base station 100, from the radio terminal 300b.

When receiving the cell center band information, the information indicating the high-power received power, and the information indicating the low-power received power, the use band determination unit 214 in the controller 202 determines if an amount of interference of the communication between the low-power base station 200 and the radio terminal 300b connected to the low-power base station 200 with the communication between the high-power base station 100 and the radio terminal 300a being connected to the high-power base station 100 (in this case, the radio terminal 300a means a radio terminal located in an outer-side area of the large cell) is equal to or smaller than a predetermined value.

Specifically, the use band determination unit 214 calculates a propagation loss (a high-power propagation loss) which is a difference between the inputted high-power received power and a pre-estimated transmission power of the high-power base station 100 and also calculates a propagation loss (a low-power propagation loss) which is a difference between the inputted low-power received power and predetermined transmission power of the low-power base station 200. Furthermore, when a value obtained by subtracting the low-power propagation loss from the calculated high-power propagation loss exceeds a predetermined threshold value, the use band determination unit 214 determines that the amount of interference is large, and determines the cell center band as a usable band (a small cell usable band) of the radio terminal 300b connected to the low-power base station 200 as illustrated in Fig. 3. On the other hand, when a value in which the low-power propagation loss is subtracted from the calculated high-power propagation loss is equal to or smaller than a predetermined threshold value, the use band determination unit 214 determines that the amount of interference is small, and determines all the frequency bands (a system band) usable in the radio communication system 1 as bands (small cell usable bands) usable in the radio terminal 300b connected to the low-power base station 200.

The scheduler 216 assigns a resource block as a radio resource to the radio terminal based on the terminal measurement information and the channel state from the radio communication unit 204 and the frequency band determined by the use band determination unit 214. Specifically, when the cell center band is determined by the use band determination unit 214 as the small cell band, the scheduler 216 assigns a resource block of the small cell band to the radio terminal in the small cell PC1. Also, when the system band is determined by the use band determination unit 214 as the small cell band, the scheduler 216 assigns a resource block of the system band to the radio terminal in the small cell PC1.

### (2) Operation of Radio Communication System

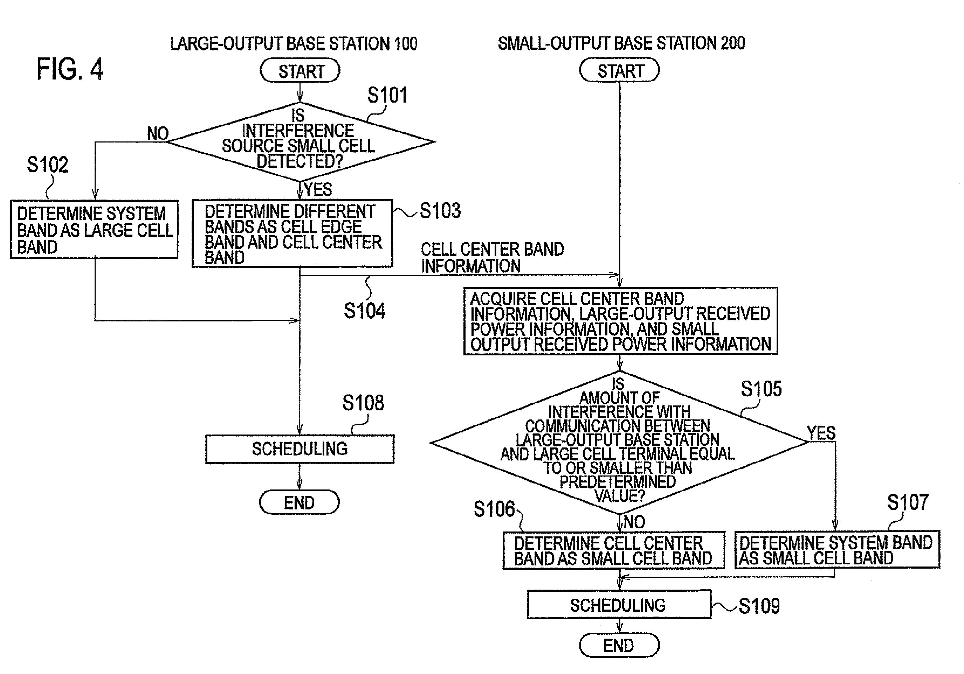

Hereinafter, the operation of the radio communication system 1 is described. Fig. 4 is a flowchart illustrating an operational example of the high-power base station 100 and the low-power base station 200 within the radio communication system 1 according to the embodiment of the present invention.

At step S101, the high-power base station 100 determines based on the low-power received power included in the terminal measurement information from the radio terminal 300a if the small cell PC1 formed by the low-power base station 200 being an interference source is detected.

When the small cell PC1 of the interference source is not detected, at step S102, the high-power base station 100 determines the system band as a frequency band (a large cell band) usable in the entire area within the large cell MC1. On the other hand, when the small cell PC1 of the interference source is detected, at step S103, the high-power base station 100 determines the cell edge band and the cell center band so that the cell edge band for use in the cell edge area MC1OUT would be different from the cell center band for use in the cell center area MC1IN.

At step S104, the high-power base station 100 transmits information indicating the determined cell center band (cell center band information) to the low-power base station 200. Then, the low-power base station 200 receives (acquires) the cell center band information from the high-power base station 100. Furthermore, the low-power base station 200 acquires, from the radio terminal 300b, information indicating each of the received power (low-power received power) of a signal from the low-power base station 200 and the received power (high-power received power) of a signal from the high-power base station 100, which are received by the radio terminal 300b.

At step S105, the low-power base station 200 determines based on the high-power received power and the low-power received power which are information acquired at step S104 if an amount of interference of the communication between the low-power base station 200 and the radio terminal 300b on the communication between the high-power base station 100 and the radio terminal 300a (a large cell terminal) is equal to or smaller than a predetermined value.

When the amount of interference exceeds a predetermined value, the low-power base station 200 determines the cell center band as a frequency band (a small cell band) for use in the small cell PC1 at step S106. On the other hand, when the amount of interference is equal to or smaller than the predetermined value, the low-power base station 200 determines the system band as a small cell band at step S107.

After the system band is determined as the large cell band at step S102, or after different frequency bands are determined as the cell edge band for use in the cell edge area MC1OUT and the cell center band for use in the cell center area MC1IN at step S103, the high-power base station 100 performs scheduling processing to assign a resource block to the radio terminal 300a at step S108. On the other hand, after the cell center band is determined as the small cell band at step S106, or after the system band is determined as the small cell band at step S107, the low-power base station 200 performs the scheduling processing to assign a resource block to the radio terminal 300b at step S109.

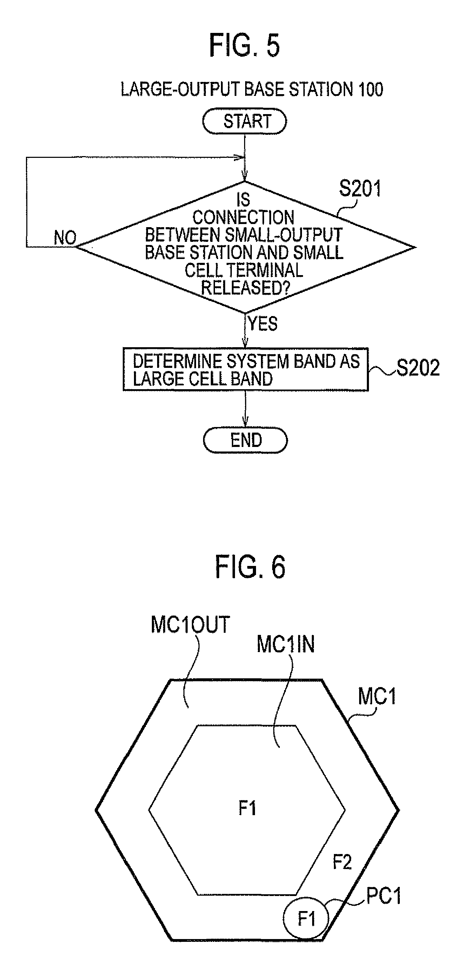

Fig. 5 is a flowchart illustrating an operational example of the high-power base station 100 in the radio communication system 1 according to the embodiment of the present invention. The operation of the flowchart in Fig. 5 is performed when the operation at step S103 of the flowchart illustrated in Fig. 4 is performed.

At step S201, the high-power base station 100 determines if the connection between the low-power base station 200 and the radio terminal 300b is released. When the connection is released, the high-power base station 100 determines the system band as a large cell band at step S202.

### (3) Advantageous Effects

In the radio communication system 1 according to the present embodiment, when detecting the small cell PC1 formed by the low-power base station 200 which is the interference source, the high-power base station 100 determines different frequency bands as the cell edge band for use in the cell edge area MC1OUT and the cell center band for use in the cell center area MC1IN. Furthermore, the high-power base station 100 transmits the determined cell center band to the low-power base station 200. The low-power base station 200 determines the cell center band sent from the high-power base station 100 as a small cell band.

Accordingly, as illustrated in Fig. 6, in one large cell MC1 of concern, a cell center band F1 in the cell center area MC1IN and a cell edge band F2 in the cell edge area MC1OUT are different from each other. Furthermore, a small cell band F1 in the small cell area PC1 is equal to the cell center band F1 and is different from the cell edge band F2.

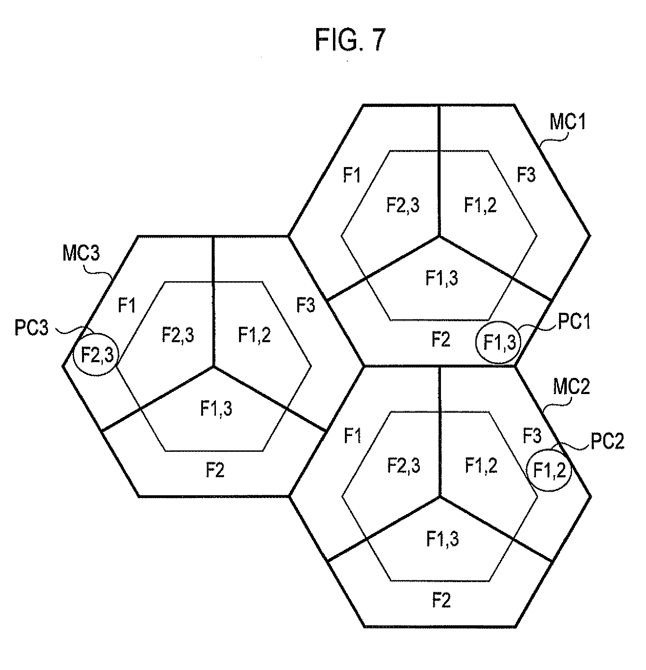

Also, as illustrated in Fig. 7, even when multiple large cells MC1 to MC3 are present and are each divided into sectors, a cell center band in the cell center area and a cell edge band in the cell edge area are different from each other in each sector. Furthermore, the small cell band in the small cell area is equal to the cell center band and different from the cell edge band. For example, in one sector of the large cell MAC1 of concern, the cell center bands F1 and F3 in the cell center area MC1IN are different from the cell edge band F2 in the cell edge area MC1OUT. Furthermore, small cell bands F1 and F3 in the small cell area PC1 are equal to the cell center bands F1 and F3 and are different from the cell edge band F2.

Accordingly, it is prevented that the communication between the high-power base station 100 and the radio terminal 300a located in the cell edge area MC1OUT and connected to the high-power base station 100 is interfered by the communication between the low-power base station 200 and the radio terminal 300b connected to the low-power base station 200. Also, unlike the conventional system, the frequency band usable by the high-power base station is not narrowed as a result of using part of all the frequency bands usable in the radio communication system as a frequency band dedicated to the small cell. Thus, the high-power base station 100 can use all the frequency bands in the radio communication system 1 by using the cell center band for the cell center area MC1IN and using the cell edge band for the cell edge area MC1OUT. This prevents the throughput of the radio terminal 300a connected to the high-power base station 100 from deteriorating.

Also, when the small cell PC1 being the interference source is not detected, the high-power base station 100 determines the system band as a frequency band (a large cell band) usable in the entire area within the large cell MC1. Accordingly, when there is no possibility of interference, the entire system band is made usable in any place in the large cell MC1, so that utilization efficiency of the frequency band can be secured.

Also, when the connection between the low-power base station 200 and the radio terminal 300b is released after the different frequency bands are determined as the cell edge band for use in the cell edge area MC1OUT and the cell center band for use in the cell center area MC1IN, the high-power base station 100 determines the system band as a frequency band (a large cell band) usable in the entire area within the large cell MC1. Accordingly, as similar to the above, when there is no possibility of interference, the entire system band is made usable in any place in the large cell MC1, so that a degree of freedom of choice can be improved.

Also, when the amount of interference of the communication between the low-power base station 200 and the radio terminal 300b with the communication between the high-power base station 100 and the radio terminal 300a (a large cell terminal) is equal to or smaller than a predetermined value, the low-power base station 200 determines the system band as a small cell band. Accordingly, when there is no possibility of interference, the entire system band can be used in the small cell PC1, so that degree of freedom of choice can be improved.

### (4) Other Embodiments

As described above, the present invention has been described by using the above-described embodiments. However, it should not be understood that the description and the drawings, which constitute one part of this disclosure, are to limit the present invention. Various alternative embodiments, examples, and operational techniques will be obvious for those who are in the art from this disclosure.

In the above-described embodiment, the interference small cell detector 112 in the controller 102 of the high-power base station 100 determines based on the low-power power in the terminal measurement information from the radio terminal 300a if the small cell PC1 formed by the low-power base station 200 is an interference source in the large cell uplink channel.

However, it may be determined as follows if the small cell PC1 is an interference source in a large cell uplink channel. In other words, the interference small cell detector 112 inputs information (interference source information) of the low-power base station 200 being installed within MC1, which is received by the wired communication unit 106 from the core network 500. The interference source information is transmitted from the low-power base station 200 or another communication device which is unillustrated. This interference source information includes information indicating that the low-power base station 200 is installed in the MC1 and identification information of the low-power base station 200. Furthermore, the interference small cell detector 112 determines that the small cell PC1 which is formed by the low-power base station 200 specified by the identification information included in the interference source information is an interference source in the large cell uplink channel.

Also, although in the above-described embodiment, the description is given of the case where the high-power base station 100 is a macrocell base station forming a macrocell and the low-power base station 200 is a picocell base station forming a picocell, the high-power base station 100 and the low-power base station 200 are not limited to these cells, and only need to have a relationship in which a transmission power of the low-power base station 200 is smaller than a transmission power of the high-power base station 100, and, as a result, the small cell is smaller than the large cell. For example, when the high-power base station 100 is a macrocell base station forming a macrocell, the low-power base station 200 can be a base station forming a microcell or a femtocell. Also, when the high-power base station 100 is a microcell base station forming a microcell, the low-power base station 200 can be a base station forming a picocell or a femtocell. Furthermore, when the high-power base station 100 is a picocell base station forming a picocell, the low-power base station 200 can be a base station forming a femtocell.

Also, in the above-described embodiments, the radio communication system 10 has the configuration based on LTE Release 9 or LTE-Advanced, but may have a configuration based on any other communication standard.

As described above, it should be understood that the present invention includes various embodiments not described herein. Accordingly, the present invention is only limited by the scope of claims and matters specifying the invention, which are appropriate from this disclosure.

Note that the contents of Japan Patent Application No. 2009-270828 (filed on November 27, 2009) are hereby incorporated by reference in their entirety.

### INDUSTRIAL APPLICABILITY

A radio communication system and a communication control method according to the invention can properly decrease an interference of a radio terminal connected to a low-power base station with a radio terminal connected to a high-power base station without deteriorating communication quality, and are useful as a radio communication system and a communication control method.

## Claims

1. A radio communication system comprising:
a high-power base station forming a large cell, and
a low-power base station having a transmission power lower than a transmission power of the high-power base station, and forming a small cell smaller than the large cell,
the low-power base station installed within the large cell, wherein
the high-power base station comprises:
a detector configured to detect the low-power base station; and
a notification unit configured to notify the low-power base station detected by the detector of a frequency band for use in an inner-side area or an outer-side area within the cell by the high-power base station, and
a frequency band for use in the inner-side area within the large cell is different from a frequency band for use in the outer-side area within the large cell, and
the low-power base station determines only the frequency band for use in the inner-side area within the large cell as a frequency band for use in the small cell based on the notification from the high-power base station.

2. The radio communication system according to claim 1, wherein
when the detector detects the low-power base station, the high-power base station determines different frequency bands as the frequency band for use in the inner-side area within the large cell and the frequency band for use in the outer-side area within the large cell, and
when the detector does not detect the low-power base station, the high-power base station determines all frequency bands usable in the radio communication system as frequency bands for use in an entire area within the large cell.

3. The radio communication system according to claim 1, wherein
when a radio terminal is not connected to the low-power base station after different frequency bands are determined as the frequency band for use in the inner-side area within the large cell and the frequency band for use in the outer-side area within the large cell, the high-power base station determines all frequency bands usable in the radio communication system as frequency bands for use in an entire area within the large cell.

4. The radio communication system according to claim 1, wherein
when an amount of interference of a communication between the low-power base station and a radio terminal connected to the low-power base station with a communication between the high-power base station and a radio terminal connected to the high-power base station is equal to or smaller than a predetermined value, the low-power base station determines all frequency bands usable in the radio communication system as frequency bands usable in the radio terminal.

5. A radio communication system comprising:
a high-power base station forming a large cell; and
a low-power base station having a transmission power lower than a transmission power of the high-power base station and forming a small cell smaller than the large cell, the low-power base station installed within the large cell, wherein
different frequency bands are used in an inner-side area and an outer-side area within the large cell, and
a frequency band for use in the small cell formed by the low-power base station is equal to a frequency band for use in the inner-side area.

6. A high-power base station forming a large cell, comprising:
a notification unit configured to notify a low-power base station of a frequency band for use in an inner-side area or an outer-side area within the large cell by the high-power base station, the low-power base station installed within the large cell, having a transmission power lower than a transmission power of the high-power base station and forming a small cell smaller than the large cell, wherein
the frequency band for use in the inner-side area within the large cell is different from the frequency band for use in the outer-side area within the large cell.

7. A low-power base station forming a small cell, wherein
the low-power base station is installed within a large cell of a high-power base station having a transmission power higher than a transmission power of the low-power base station and forming the large cell larger than the small cell,
the low-power base station is notified, by the high-power base station, of a frequency band for use in an inner-side area or an outer-side area within the large cell by the high-power base station, and
the low-power base station comprises a determination unit configured to determine only the frequency band for use in the inner-side area within the large cell by the high-power base station as a frequency band for use in the small cell based on the notification from the high-power base station, and
the frequency band for use in the inner-side area within the large cell is different from the frequency band for use in the outer-side area within the large cell.

8. A communication control method in a radio communication system which includes a high-power base station forming a large cell and a low-power base station having a transmission power lower than a transmission power of the high-power base station and forming a small cell smaller than the large cell, the low-power base station installed within the large cell, comprising the steps of:
detecting the low-power base station by the high-power base station;
sending the detected low-power base station a notification indicating a frequency band for use in an inner-side area or an outer-side area within the cell by the high-power base station, the frequency band for use in the inner-side area within the large cell being different from the frequency band for use in the outer-side area within the large cell; and
determining, by the low-power base station, only the frequency band for use in the inner-side area within the large cell as a frequency band for use in the small cell based on the notification from the high-power base station.
